## Europäisches Patentamt

## European Patent Office

## Office européen des brevets

(11) Veröffentlichungsnummer: **0 297 033**
**B1**

(12) **EUROPÄISCHE PATENTSCHRIFT**

(45) Veröffentlichungstag der Patentschrift:
02.05.90

(51) Int. Cl.⁴: **E04B 1/19**, F16B 7/18

(21) Anmeldenummer: **88810331.4**

(22) Anmeldetag: **24.05.88**

(54) **Verbindungselement für eine Stange.**

(30) Priorität: **26.05.87 CH 2052/87**
**03.09.87 CH 3380/87**
**21.04.88 CH 1490/88**

(43) Veröffentlichungstag der Anmeldung:
**28.12.88 Patentblatt 88/52**

(45) Bekanntmachung des Hinweises auf die Patenterteilung:
**02.05.90 Patentblatt 90/18**

(84) Benannte Vertragsstaaten:
**AT BE CH DE ES FR GB GR IT LI LU NL SE**

(56) Entgegenhaltungen:
**EP-A- 0 044 057**
**EP-A- 0 158 149**
**CH-A- 588 233**
**DE-A- 3 429 228**
**FR-A- 2 494 353**
**FR-A- 2 582 361**

(73) Patentinhaber: **SYMA INTERCONTINENTAL AG,**
**Rosenberg, CH-9533 Kirchberg(CH)**

(72) Erfinder: **Strässle, Marcel, Rosenberg,**
**CH-9533 Kirchberg(CH)**

(74) Vertreter: **Schick, Carl et al, PATENTANWALTS-BUREAU**
**ISLER AG Walchestrasse 23, CH-8006 Zürich(CH)**

## Beschreibung

Die vorliegende Erfindung betrifft ein Verbindungselement für eine Stange gemäss dem Oberbegriff des Patentanspruchs 1 und wie es auch aus der FR-A 2 494 353 oder der EP-A 44 057 bekannt ist.

Bei bekannten Gestellen oder Raumfachwerken werden oft Gerüststangen über Knotenstücke derart miteinander verbunden, dass das Endteil einer Gerüststange lösbar an ein Knotenstück angeschraubt wird, das an einer anderen Gerüststange oder Tragsäule seitlich befestigt ist. Beim Aufbau eines solchen Raumfachwerkes besteht manchmal der Wunsch, eine Gerüststange beispielsweise zwischen zwei Knotenstücke einzufügen, ohne sie räumlich zu verschieben, um vor dem Anschrauben für die Schrauben Platz frei zu lassen, die an den Endteilen der Gerüststange befestigt sind.

Die bekannten Raumfachwerke werden einer solchen speziellen Aufgabe nicht gerecht. Die Erfindung zeigt demgegenüber einen Weg, um auch diese zusätzliche Aufgabe zu berücksichtigen und dabei zu einem Verbindungselement zu gelangen, das auch eine in neuerer Zeit bevorzugt angestrebte leichte Montage der in derartigen Raumfachwerken verwendeten Gerüststangen gestattet.

Die Lösung dieser Aufgabe erfolgt erfindungsgemäss mit Hilfe eines Verbindungselementes nach dem kennzeichnenden Teil des Patentanspruchs 1.

Weitere vorteilhafte Ausgestaltungen der Erfindung sind in den abhängigen Ansprüchen angegeben.

Die Erfindung wird nachfolgend durch Beschreibung eines Ausführungsbeispiels anhand einer Zeichnung näher erläutert. Es zeigt:

Fig. 1 eine schematische Darstellung zur Erläuterung der Arbeitsweise einer mit einem Verbindungselement nach der Erfindung versehenen Gerüststange im Vergleich mit einer solchen nach dem Stand der Technik,

Fig. 2 eine schematische Darstellung im Schnitt des Endteils einer Gerüststange, an der der Gewindeeinsatz eines Verbindungselementes nach der Erfindung befestigt wurde,

Fig. 3 eine detaillierte Darstellung dieses Gewindeeinsatzes im Querschnitt und in Seitenansicht,

Fig. 4 eine Querschnittdarstellung eines Gewindebolzens zu einem solchen Verbindungselement,

Fig. 5 den Längs- und Querschnitt einer Sechskanthülse dazu,

Fig. 6 den Querschnitt einer Abdeckhülse für dieses Verbindungselement,

Fig. 7 eine schematische Darstellung im Querschnitt von einem solchen Verbindungselement vor der Montage,

Fig. 8 die entsprechende Darstellung nach der Montage,

Fig. 9 eine schematische Darstellung einer anderen an einem Endteil einer Gerüststange zu befestigenden Hülse eines Verbindungselementes nach der Erfindung,

Fig. 10 eine detaillierte Darstellung eines Hülsenkopfs zu dieser Hülse im Querschnitt,

Fig. 11 eine seitliche Darstellung eines Gewindebolzens zu einem solchen Verbindungselement,

Fig. 12 den Längs- und Querschnitt einer Sechskanthülse dazu,

Fig. 13 eine detaillierte Darstellung eines Schraubeneinsatzes dazu,

Fig. 14 eine schematische Darstellung im Querschnitt von einem solchen Verbindungselement vor der Montage,

Fig. 15 eine Darstellung eines kugelförmigen Knotenstücks,

Fig. 16 eine seitliche Ansicht einer Gerüststange ohne Verbindungselement,

Fig. 17 eine schematische Darstellung im Querschnitt von einer anderen Ausführung eines solchen Verbindungselementes,

Fig. 18 eine schematische Darstellung im Querschnitt einer weiteren Ausführung eines solchen Verbindungselementes, bei dem eine Drehverbindung zwischen einer Führungshülse und dem Hülsenkopf vorgesehen ist,

Fig. 19 eine schematische Darstellung im Querschnitt einer Ausführung mit zwei Federn,

Fig. 20 eine perspektivische Darstellung einer Führungshülse mit abgebogenen für eine Bajonettsicherung vorgesehenen seitlichen länglichen Oeffnungen,

Fig. 21 die Draufsicht auf eine Variante einer Führungshülse, bei der die längliche Oeffnung ein abgewinkeltes Ende aufweist,

Fig. 22 die Draufsicht auf einer weiteren Variante einer Führungshülse mit einer S-förmigen seitlichen Oeffnung,

Fig. 23 die Draufsicht auf einer weiteren Variante einer Führungshülse mit einer schräg verlaufenden seitlichen Oeffnung,

Fig. 24 eine schematische Darstellung im Querschnitt von einer mit einer Verstärkungshülse versehenen Führungshülse, und

Fig. 25-27 verschiedene Varianten einer Gerüststange im Schnitt.

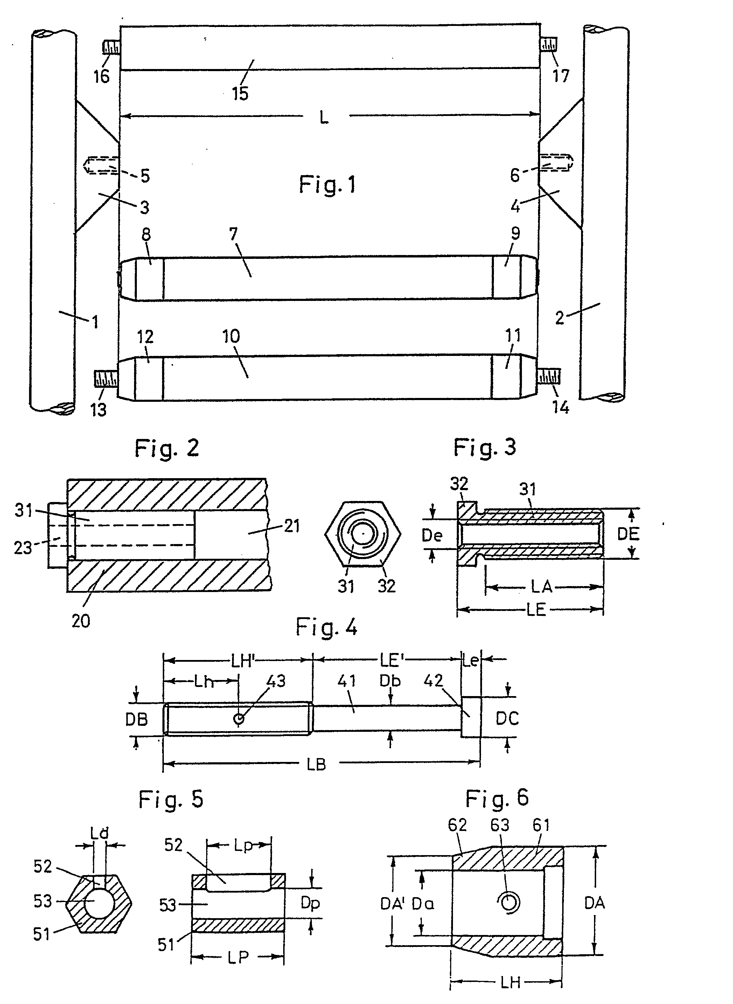

In Fig. 1 sind zwei Gerüststangen 1 und 2 dargestellt, an denen je ein Knotenstück 3 bzw. 4 befestigt ist. Ein solches Knotenstück kann beispielsweise die Hälfte eines flachen hexagonalen Prismas sein, das mit je einem Gewindeloch an jeder der drei kleineren Seitenflächen versehen ist. Die Gerüststangen 1 und 2 sind derart in einer in der Figur nicht näher angegebenen Struktur fest montiert, dass die Symmetrieachse eines Gewindeloches 5 des Knotenstücks 3 und die Symmetrieachse eines Gewindeloches 6 des Knotenstücks 4 in einer Gerade liegen.

Fig. 1 zeigt auch eine Gerüststange 7, die an ihren Enden mit je einem erfindungsgemässen Verbindungselement 8 und 9 im geöffneten Zustand versehen ist, sowie eine Gerüststange 10, die an ihren Enden je ein geschlossenes Verbindungselement 11 und 12 aufweist. Von den Verbindungselementen 8, 9, 11, 12 ist in Fig. 1 jeweils nur eine Abdeckhülse sichtbar, aus der im geschlossenen Zustand je eine Schraube 13 bzw. 14 herausragt. Im Vergleich zu einer erfindungsgemässen Gerüststange der Länge L im geöffneten Zustand hat eine Gerüststange 15 der Nennlänge L nach dem Stand der Technik den Nachteil, dass sie wegen der vorspringenden Schrauben 16 und 17 nicht in die Gewindelöcher anschraubbar ist, ohne die Gerüststange 1 und/oder 2 für die Montage aus ihrem Platz zu versetzen, wenn der effektive Abstand zwischen den Frontseiten der Knotenstücke 5 und 6 auch gleich L ist.

Die Gerüststange mit den Verbindungselementen nach der Erfindung funktioniert nun folgendermassen:

Durch Drehen der Abdeckhülsen 11 und 12 um ihre Symmetrieachsen in der einen Richtung drehen sich auch die Schrauben 13 und 14, die jedoch zugleich eine axiale Verschiebung erfahren, bis sie im Innern der Abdeckhülse verschwinden. In diesem Moment ist die Gesamtlänge der Gerüststange 7 mit den zwei Verbindungselementen 8 und 9 im offenen Zustand gleich L, so dass man sie ohne weiteres zwischen die Knotenstücke 5 und 6 einfügen kann, derart, dass durch Drehen der Abdeckhülsen 8 und 9 in der anderen Richtung um ihre Symmetrieachse eine Anschraubung der sich drehend herauskommenden Schrauben in die Gewindelöcher 5 und 6 möglich ist. Das Abmontieren geschieht in einfachster Weise durch Drehen der Abdeckhülsen in Richtung Oeffnen.

Der in Fig. 2 dargestellte Endteil einer Gerüststange 20 weist eine Bohrung 21 auf, in die ein Gewindeeinsatz 31 stirnseitig ortsfest verbunden ist, dessen axiale Innenbohrung 23 ein Gewinde aufweist. Die Verbindung zwischen dem Gewindeeinsatz 31 und der Gerüststange 20 kann beispielsweise durch Kleben oder Einschrauben erfolgen.

In Fig. 3 ist ein Gewindeeinsatz 31 detailliert dargestellt, der nicht nur ein inneres Gewinde über die ganze Länge LE, sondern vorzugsweise auch ein äusseres Gewinde der Länge LA aufweist. Das eine Ende dieses Gewindeeinsatzes ist als Sechskantkopf 32 ausgebildet.

Fig. 4 zeigt einen Gewindebolzen 41 der Gesamtlänge LB, von dem ein Teil der Länge LH′ mit einem Gewinde versehen und ein Teil der Länge LE′ glatt ist; ein dritter Teil der Länge Le entspricht dem Kopf 42, dessen Durchmesser DC ist, wobei in einem Abstand Lh < LH′ von der Spitze der Gewindeteil eine Durchgangsbohrung 43 aufweist.

Fig. 5 zeigt eine Sechskanthülse 51 in der Form eines axial durchbohrten, sechseckigen Prismas der Länge LP, das mit einer seitlichen länglichen Oeffnung 52 der Länge Lp und Breite Ld versehen ist. Zweckmässigerweise kann eine zweite in der Figur nicht dargestellte längliche Oeffnung in bezug auf die Drehachse symmetrisch zur ersten Oeffnung ausgeführt sein.

In Fig. 6 ist eine Schnittansicht quer zur Längsachse der Abdeckhülse 61 dargestellt, deren Aussendurchmesser DA vorzugsweise dem Aussendurchmesser der Gerüststange entspricht und deren Innendurchmesser Da etwas grösser als der Aussendurchmesser der Sechskanthülse 51 ist. Dabei weist die Abdeckhülse 61 an der einen Seite einen konisch ausgebildeten Teil 62 auf, so dass der Durchmesser DA′ der linken Stirnfläche etwas kleiner als der Durchmesser DA ist. Etwa in der Mitte der Mantelfläche der Abdeckhülse 61 ist ein Gewindeloch 63 vorhanden, durch das ein in der Figur nicht dargestellter Gewindestift, beispielsweise ein Innensechskantgewindestift, anschraubbar ist, um im eingebauten Zustand die Sechskanthülse 51 im Innern der Abdeckhülse festzuklemmen.

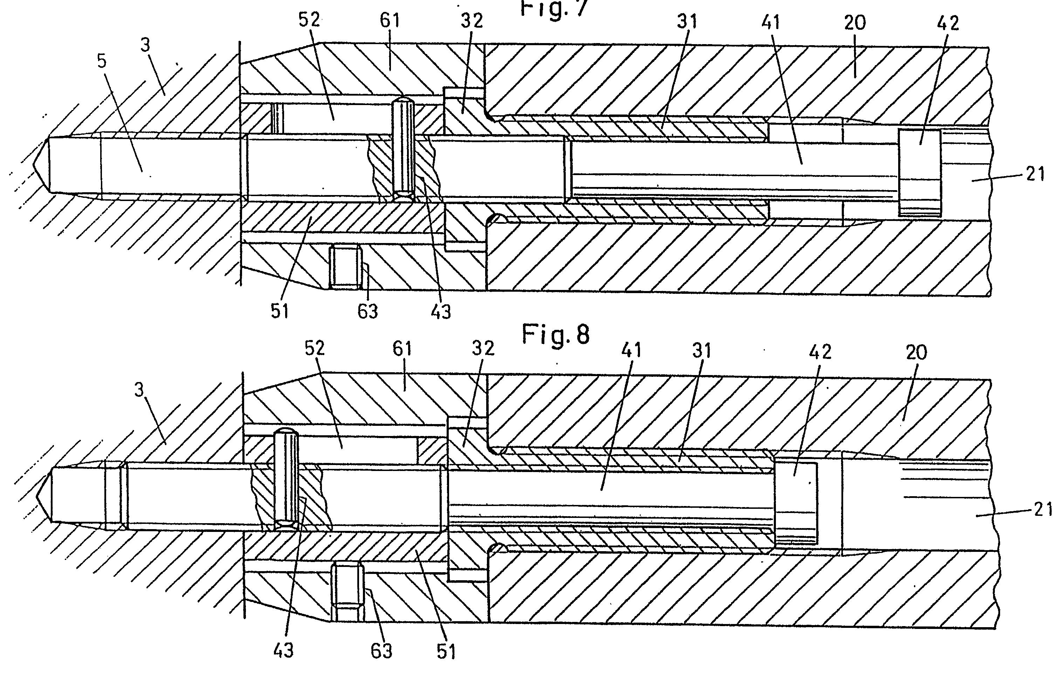

Die Elemente 41, 51 und 61 werden wie folgt montiert (Fig. 7,8):

Der Gewindebolzen 41, dessen Gewindeaussendurchmesser DB dem Innendurchmesser De des Gewindeeinsatzes 31 entspricht, wird im Innenraum 21 der Gerüststange 20 an den Gewindeeinsatz 31 (Fig. 2) angeschraubt, bis sein Teil der Länge LH′ durch den Gewindeeinsatz 31 hindurchgekommen ist; in diesem Moment kann sich der Gewindebolzen 41 innerhalb des Gewindeeinsatzes 31 frei drehen, da die Länge LE′ etwas grösser als die Länge LE und der Durchmesser Db des glatten Teils des Gewindebolzens etwas kleiner als der Durchmesser De ist.

Sodann wird die Sechskanthülse 51 auf den herausragenden Teil des Gewindebolzens 41 eingesetzt, was unverzüglich geschehen kann, weil der Aussendurchmesser DB des Gewindebolzens 41 kleiner als der Innendurchmesser Dp der Sechskanthülse 51 ist, die zudem kein Gewinde aufweist. In einem weiteren Schritt wird ein Klemmstift lose durch die Oeffnung 52 des Gewindeeinsatzes 51 geführt und in die Bohrung 43 des Gewindebolzens 41 fest eingeklemmt. Damit wird erreicht, dass die Sechskanthülse 51 und der Gewindebolzen 41 sich gemeinsam drehen können, jedoch derart, dass obwohl bei der Drehbewegung sich der Gewindebolzen 41 gleichzeitig auch in axialer Richtung bewegt, die Sechskanthülse keine axiale Verschiebung erfährt, weil sich der Klemmstift beim Drehen innerhalb der länglichen Oeffnung 52 verschiebt. Für den Zweck der Erfindung ist also die Abdeckhülse 61 nicht unbedingt notwendig; sie kann jedoch aus ästhetischen Gründen verwendet werden. Anstelle der Sechskanthülse kann auch eine andersgeartete Hülse verwendet werden.

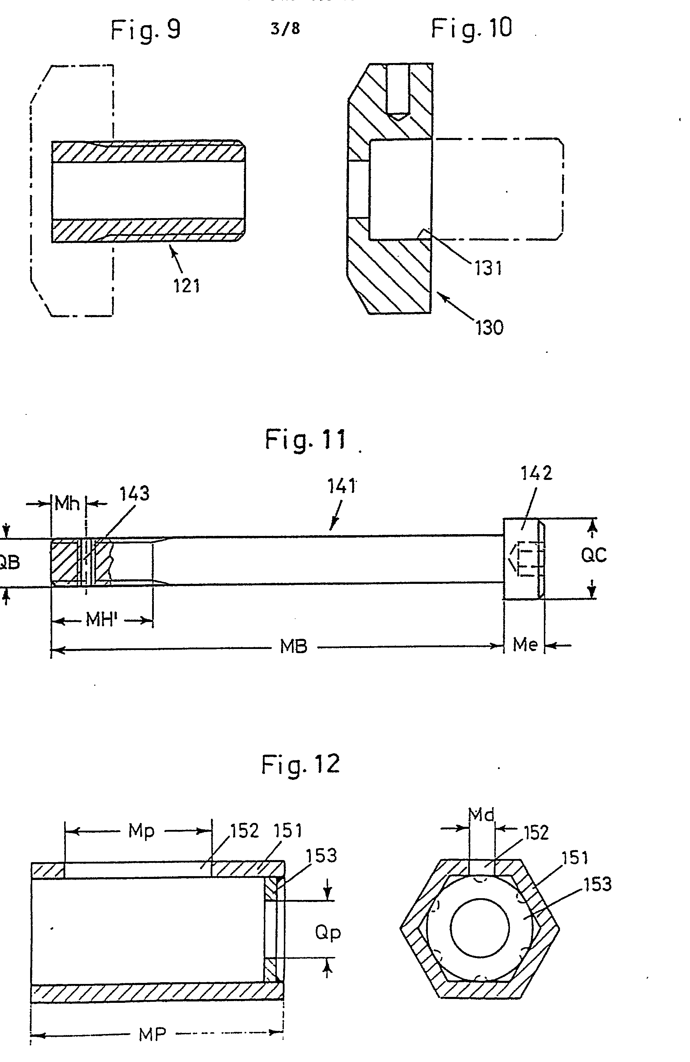

Der in Fig. 10 dargestellte Hülsenkopf 130 weist eine Bohrung 131 auf, in die eine Hülse 121 (Fig. 9) stirnseitig z.B. durch Kleben oder Schweissen ortsfest verbindbar ist, wobei die axiale Innenbohrung der Hülse 121 vorzugsweise kein Gewinde aufweist. Die Hülse 121 und der Hülsenkopf 130 bilden einen Hülseneinsatz. Die Verbindung zwischen dem Hülseneinsatz und der Gerüststange 10 (Fig. 1) kann beispielsweise durch Kleben oder Einschrauben erfolgen.

Fig. 11 zeigt einen Gewindebolzen 141 der Gesamtlänge MB + Me, von dem ein Teil der Länge MH′ mit einem Gewinde versehen und ein Teil der Länge MB - MH′ glatt ist; der Teil der Länge Me entspricht dem Kopf 142, dessen Durchmesser QC ist, wobei in einem Abstand Mh < MH′ von der Spitze des Gewindebolzens der Gewindeteil eine Durchgangsbohrung 143 aufweist.

Fig. 12 zeigt eine Sechskanthülse 151 in der Form eines axial durchbohrten, sechseckigen Prismas der Länge MP, das mit einer seitlichen länglichen Oeffnung 152 der Länge Mp und Breite Md versehen ist. Zweckmässigerweise kann eine zweite in der Figur nicht dargestellte längliche Oeffnung in bezug auf die Drehachse symmetrisch zur ersten Oeffnung ausgeführt sein. Die Innenbohrung des Prismas kann rund oder auch beispielsweise sechskantig (Fig. 12) sein. Die Sechskanthülse 151 weist auf der Stirnseite eine Bodenfläche 153 mit einer axialen Bohrung mit dem Durchmesser Qp auf.

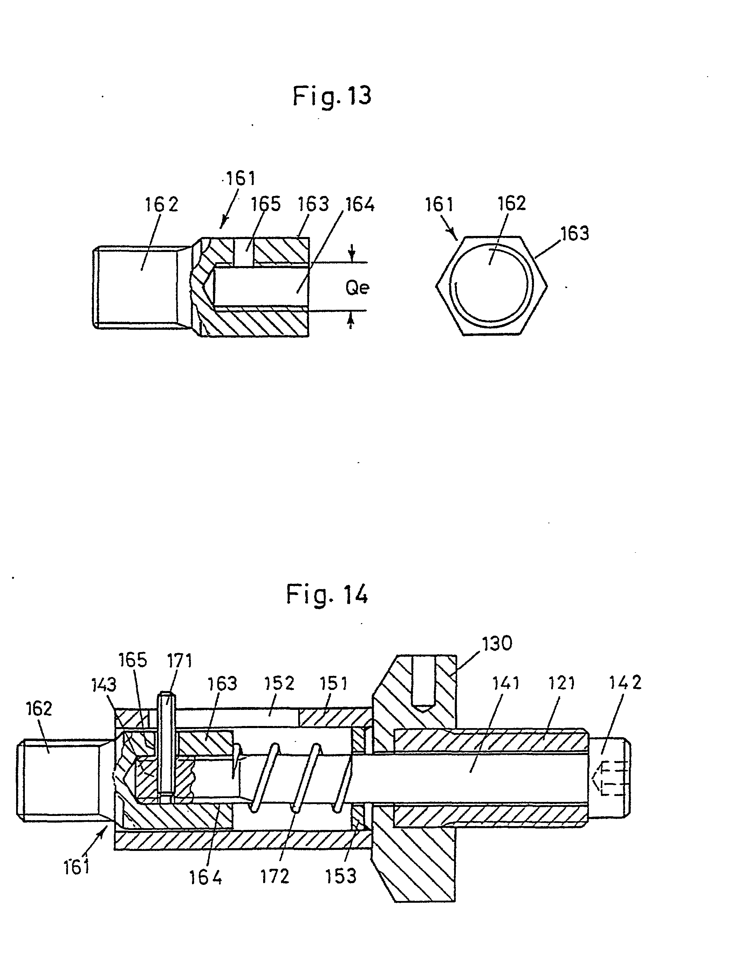

In Fig. 13 ist eine Seiten- und Schnittansicht quer zur Längsachse eines Führungs- oder Schraubeneinsatzes 161 mit einem Gewindeteil 162 dargestellt, dessen Aussendurchmesser dem Aussendurchmesser des Gewindeloches 5 der Gerüststange 1 (Fig. 1) entspricht. Dabei weist der Schraubeneinsatz 161 an der einen Seite einen sechskantförmig ausgebildeten Teil 163 mit einer Gewindebohrung 164 auf, in die der Gewindebolzen einschraubbar ist. Etwa in der Mitte der Mantelfläche des Schraubeneinsatzes 161 ist senkrecht ein Gewindeloch 165 vorhanden, durch das ein in Fig. 14 dargestellter Gewindestift 171, beispielsweise ein Innensechskantgewindestift, anschraubbar ist, um im eingebauten Zustand den Schraubeneinsatz 161 zu führen.

Die Elemente 141, 151 und 161 werden wie folgt (Fig. 14) montiert:

Der Gewindebolzen 141, dessen Gewindeaussendurchmesser QB dem Innendurchmesser Qe des Schraubeneinsatzes 161 entspricht, wird im Innenraum der Gerüststange durch die Innenbohrung des Hülseneinsatzes 121, 130 (Fig. 9 und 10) eingeführt, bis sein Teil der Länge MH' durch den Hülseneinsatz hindurchgekommen ist, wobei sich der Gewindebolzen 141 innerhalb des Hülseneinsatzes immer frei drehen kann, da der Innendurchmesser der Hülse 121 etwas grösser als der Durchmesser QB des Gewindebolzens ist.

Sodann wird die Sechskanthülse 151 von der mit dem Boden versehenen Seite her auf den herausragenden Teil des Gewindebolzens 141 eingesetzt, was unverzüglich geschehen kann, weil der Aussendurchmesser QB des Gewindebolzens 141 kleiner als der Innendurchmesser der Bodenbohrung der Sechskanthülse 151 ist, die zudem kein Gewinde aufweist. In einem weiteren Schritt wird eine Spiralfeder 172 (Fig. 14) lose über den Gewindebolzen 141 geführt und der Gewindebolzen 141 in die Bohrung 164 des Schraubeneinsatzes 161 angeschraubt. Damit wird erreicht, dass der Schraubeneinsatz 161 und der Gewindebolzen 141 sich gemeinsam axial gefedert bewegen können, jedoch derart, dass, obwohl bei einer Drehbewegung sich der Gewindebolzen 141 gleichzeitig auch in axialer Richtung bewegen kann, die Sechskanthülse 151 keine axiale Verschiebung erfährt.

Der Gewindebolzen 141 (Fig. 14) könnte auch in seiner ganzen Länge MB (Fig. 11) mit einem Gewinde versehen sein. Die Feder 172 könnte auch anders geartet und/oder beispielsweis ausserhalb des Innenraums der Führungshülse angeordnet sein. Die Innenbohrung der Hülsen 31, 121 und 221 kann auch glatt sein.

Im Fallbeispiel der Fig. 12 und 13 kann der Gewindestift 171 entfallen. Das Knotenstück 3 nach Fig. 1 kann selbstverständlich auch kugelförmig ausgestaltet sein.

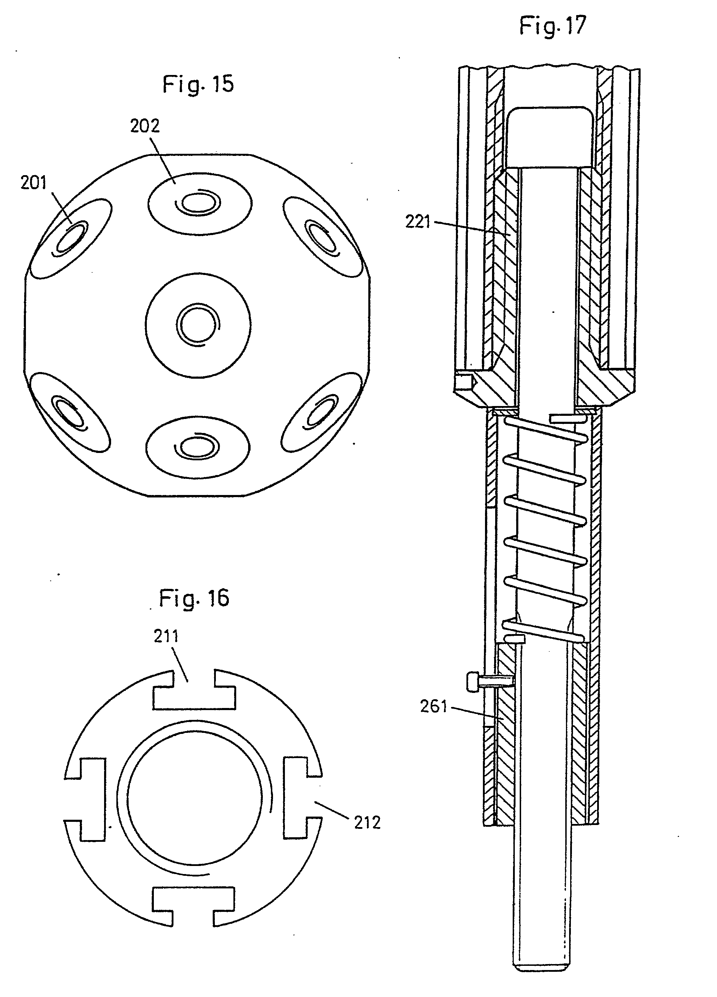

Das in Fig. 15 beispielsweise dargestellte Knotenstück weist eine kugelförmige Gestalt mit mehreren abgeplatteten Stellen 201, 202, .... auf, die je mit einem Gewindeloch versehen sind, an das jeweils ein Rohrstab anschraubbar ist, um mit Hilfe von mehreren Rohrstäben und Knotenstücken ein Fachwerk errichten zu können.

Der in Fig. 16 dargestellte Rohrstab weist einen runden Querschnitt auf und ist mit Längsnuten 211, 212, ... versehen. Derartige Rohrstäbe, die auch rechteckförmig sein können, sind beispielsweise aus der CH-PS-588 233 bekannt.

Das in Fig. 17 dargestellte Verbindungselement weist anstelle des Schraubeneinsatzes 161 nach Fig. 13 einen einfacheren Führungseinsatz 261 auf.

Die Gerüststange (Fig. 1) mit Verbindungselementen nach den Figuren 9 bis 17 funktioniert folgendermassen:

Die Schrauben 13 und 14 sind federnd gelagert und können durch ein leichtes Drücken eine axiale Verschiebung erfahren, bis sie im Innern der Abdeckhülse verschwinden. In diesem Moment ist die Gesamtlänge der Gerüststange 7 mit den zwei Verbindungselementen 8 und 9 im offenen Zustand gleich L, so dass man sie ohne weiteres zwischen die Knotenstücke 3 und 4 einfügen kann, derart, dass durch Drehen der Abdeckhülsen 8 und 9 in der geeigneten Richtung um ihre Symmetrieachse eine Anschraubung der sich drehend herauskommenden Schrauben in die Gewindelöcher 5 und 6 möglich ist. Das Abmontieren geschieht in einfachster Weise durch Drehen der Abdeckhülsen in Richtung Öffnen.

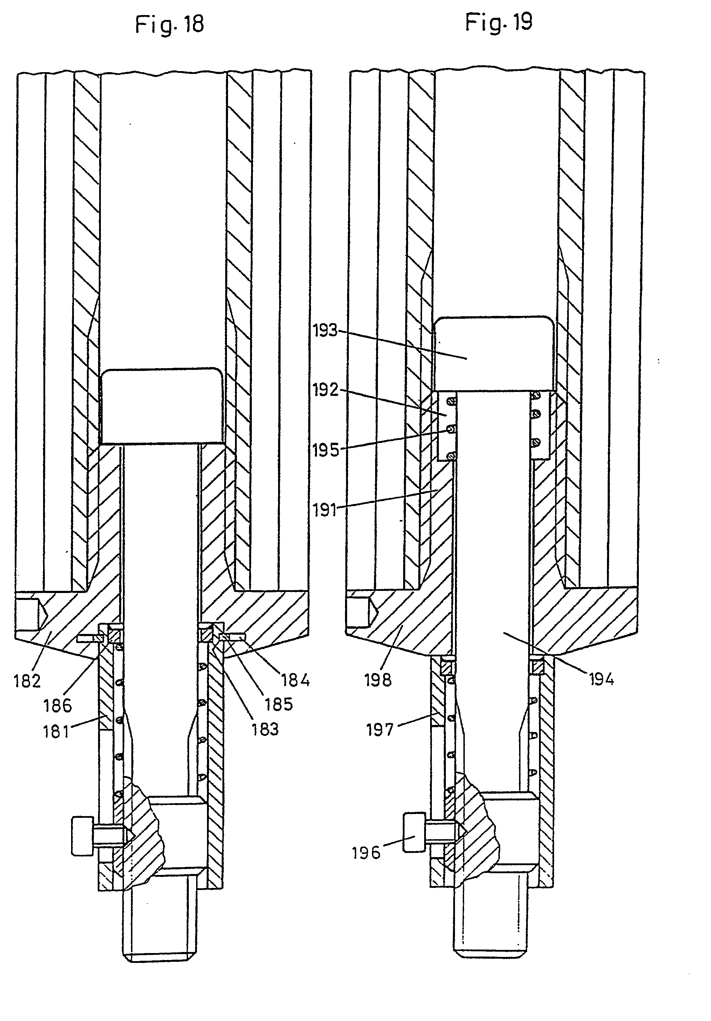

Das Verbindungselement nach Fig. 18 weist eine Führungshülse 181 auf, die in eine zentrale Bohrung des Hülsenkopfes eines Hülseneinsatzes 182 einsetzbar ist, um durch einen in radiale Ringschlitze 183, 184 einsetzbaren Federring 185 eine Drehverbindung zu bilden, wodurch eine Bodenfläche 186 der Führungshülse 181 auch entfallen könnte.

Der Hülseneinsatz 191 des Verbindungselementes nach Fig. 19 weist eine innere Hülse oder Büchse auf, die mit einer zentralen Bohrung 192 versehen ist, derart, dass zwischen dem Boden dieser Bohrung und dem Kopf 193 eines Gewindebolzens 194 eine Feder 195 eingefügt ist, die über den Gewindebolzen 194 und einen Gewindestift 196 eine Führungshülse 197 gegen den Hülsenkopf 198 des Hülseneinsatzes drücken kann, in dem die Büchse 191 montiert ist.

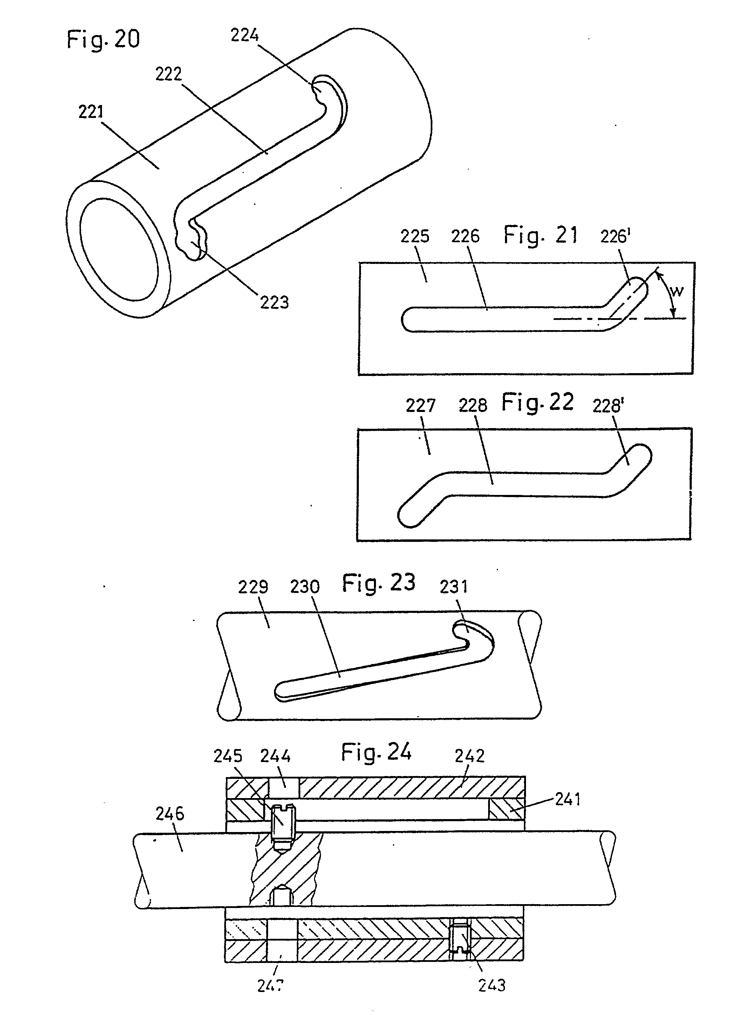

Die Führungshülse nach Fig. 20 besteht aus einem rohrförmigen mit einer seitlichen länglichen Oeffnung 222 versehenen Körper 221, bei dem die Enden der Oeffnung 222 jeweils in entgegengesetzter Richtung senkrecht zur Drehachse des rohrförmigen Körpers 221 verlängert sind, wobei vorzugsweise die eine verlängerte Oeffnung 223 eine kreisförmige und die andere verlängerte Oeffnung eine halbkreisförmige Erweiterung ausweist. Eine Führungshülse nach Fig. 20 oder eine einfachere mit nur einer verlängerten Oeffnung kann anstelle der Elemente 51 (Fig. 5,7,8), 151 (Fig. 12, 14), 181 (Fig. 18) und 197 (Fig. 19) verwendet werden, wobei die Führungshülse eine in Fig. 20 nicht dargestellte Bodenfläche wie die Bodenfläche 153 der Hülse 151 (Fig. 12) aufweisen kann.

Bei der rohrförmigen Führunghülse 225 nach Fig. 21 ist das eine Ende 227 der länglichen Öffnung 226 in einem Winkel w bezüglich der Drehachse der Hülse gebogen, wobei der Winkel w einen beliebigen Wert zwischen 0 und 90° aufweisen kann.

Die rohrförmige Führungshülse 227 nach Fig. 22 weist eine kurvenoder S-förmige Öffnung 228 und die Führungshülse 229 nach Fig. 23 eine schräg verlaufende längliche Öffnung 230 auf, deren ein Ende mit einer umgebogenen Erweiterung 231 versehen sein kann. Auch die Führungshülsen nach den Fig. 21 bis 23 können anstelle der Elemente 51, 151, 181 und 197 eingesetzt werden, wobei in einem solchen Fall die Feder 172 und die Bodenfläche 153 (Fig. 14) entfallen könnten, weil beim Drehen der Führungshülse 225, 227 oder 229 der in die Öffnung 226', 228' bzw. 230 eingeführte Stift automatisch nach vorne verschoben wird, was ein Einschrauben des Gewindebolzens in das Gewindeloch eines Knotenstücks erleichtert.

Die verstärkte Hülse nach Fig. 24 weist eine rohrförmige Führungshülse 241 beispielsweise nach einer der Figuren 20 bis 23 auf, und zwar gegebenenfalls auch ohne die sonst vorgesehenen kreisförmigen, halbkreisförmigen oder umgebogengen Erweiterungen 223, 224 und 231 (Fig. 20, 23). Die Führungshülse 241 ist in den Innenraum einer Verstärkungshülse 242 eingeführt, derart, dass der Aussendurchmesser der Führungshülse 241 dem Innendurchmesser der Verstärkungshülse 242 entspricht. Die Verbindung zwischen der Hülse 242 und der Hülse 241 kann durch Einschrauben, Verkleben, Einpressen usw. realisiert werden. Gegebenenfalls kann eine relative Bewegung zwischen beiden Hülsen durch eine Schraube 243 verhindert werden. Die Hülse 242 kann eine runde oder eine transversal erweiterte Oeffnung 244 aufweisen, durch die ein Führungsstift 245 eines Gewindebolzens 246 zugänglich ist.

Die Hülse 241 und die Hülse 242 können im montierten Zustand eine gemeinsame Bohrung 247 aufweisen, durch die eine Verriegelungsschraube in den Gewindebolzen 246 eingeschraubt werden kann.

Die Arbeitsweise eines Verbindungselementes mit einer Hülse nach einer der Figuren 20 bis 24 ist an sich gleich wie bei den bereits beschriebenen Verbindugnselementen. Ein Unterschied besteht darin, dass die für das Einschrauben des Gewindebolzens 246 in ein Knotenstück notwendige Kraft über den Stift 245 übertragen wird, der daher entsprechend dimensioniert sein muss. Der Stift 171 nach Fig. 14 dient hingegen, um den Gewindebolzen 141 mit den Fingern vorzugsweise mit dem Daumen in einer gewünschten Position zu halten.

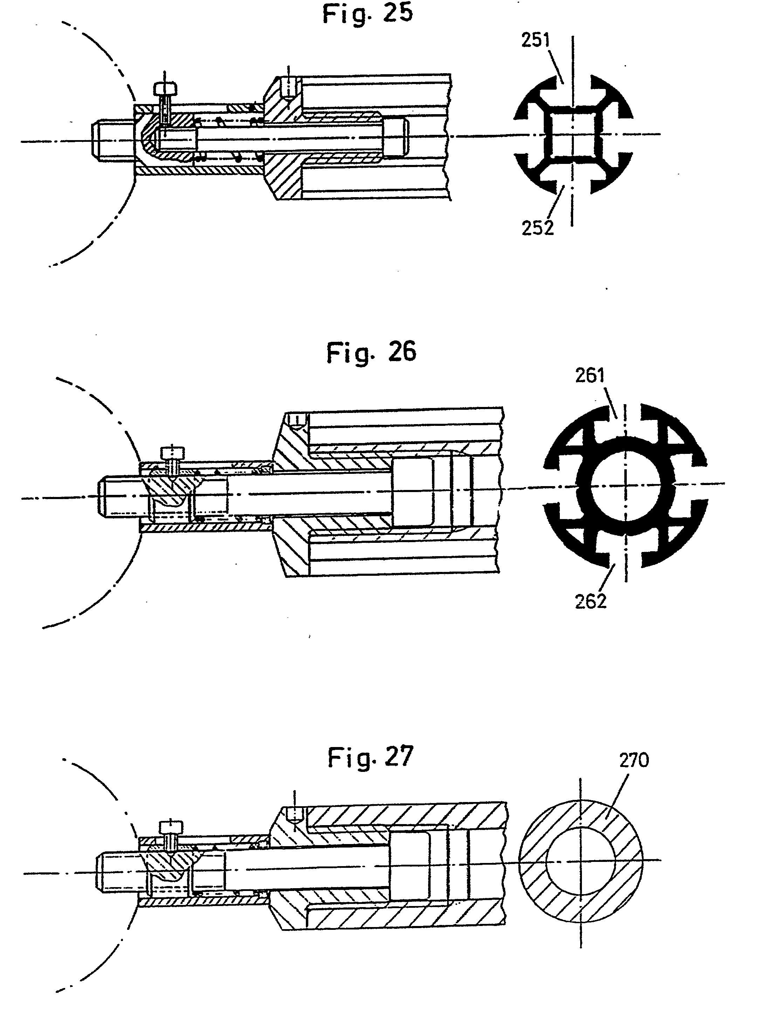

Die Gerüststangen nach Fig. 25 und 26 weisen Längsschlitze 251, 252 bzw. 261, 262 auf, in die die Kanten von Wandungen durch eine leichte axiale Drehung der Gerüststange einführbar sind. Im Gegensatz dazu ist in Fig. 27 eine einfache zylindrische Gerüststange 270 dargestellt.

**Patentansprüche**

1. Verbindungselement für eine Stange eines Raumfachwerkes, wobei das Verbindungselement einen drehbar an einem Ende der Stange (20) montierbaren Gewindebolzen (41; 141) sowie eine Hülse (51; 151) mit einer axialen Durchgangsbohrung (53) aufweist, in die der Gewindebolzen (41; 141) einfügbar ist, und wobei durch eine längliche an der Mantelfläche der Hülse (51; 151) verlaufende Öffnung (52; 152) ein Stift (43; 171) lose einfügbar und mit dem Gewindebolzen (41) verbindbar ist, dadurch gekennzeichnet, dass der Gewindebolzen (141) mit einem von der Hülse (151) geführten Führungseinsatz (161; 261) verbindbar ist, indem durch die längliche, an der Mantelfläche der Hülse (151) vorhandene Öffnung (152) ein Stift lose einfügbar und in eine Lochung (165) des Führungseinsatzes (161) fest einklemmbar ist, oder dass die mit der länglichen Öffnung versehene Hülse (241) in eine weitere grössere Verstärkungshülse (242) eingeführt ist.

2. Verbindungselement nach Anspruch 1, dadurch gekennzeichnet, dass das Verbindungselement einen an einem Ende einer zu verwendenden Stange (20) ortsfest verbindbaren Hülseneinsatz (31; 130, 121) umfasst, der eine Durchgangsbohrung für den Gewindebolzen (41; 141) aufweist.

3. Verbindungselement nach Anspruch 2, dadurch gekennzeichnet, dass der Gewindebolzen (41; 141) einen glatten Teil aufweist, dessen Länge (LE') grösser als die Länge (LE) des Hülseneinsatzes (31; 121) ist.

4. Verbindungselement nach einem der Ansprüche 1 bis 3, dadurch gekennzeichnet, dass eine Feder (172) vorhanden ist, die die Hülse (151) gegen einen am Ende der Stange (10) montierbaren Hülseneinsatz (130, 121) drückt.

5. Verbindungselement nach Anspruch 4, dadurch gekennzeichnet, dass die Feder eine sich im Innenraum der Hülse (151) befindende Spiralfeder (172) ist.

6. Verbindungselement nach einem der Ansprüche 1 bis 5, dadurch gekennzeichnet, dass die Öffnung (222; 226; 228; 230) der Hülse (221; 225; 227; 229) zumindest an einem Ende eine umgebogene Erweiterung (224; 226'; 228'; 231) aufweist.

7. Verbindungselement nach einem der Ansprüche 1 bis 6, dadurch gekennzeichnet, dass das Verbindungselement eine Abdeckhülse aufweist, mit der die Hülse (51; 151; 221; 229; 242) abdeckbar und mit ihr verbindbar ist.

**Revendications**

1. Elément de liaison destiné à une barre de treillis à trois dimensions, l'élément de liaison présentant un boulon fileté (41, 141) susceptible d'être monté à l'extrémité de la barre (20) de manière à pouvoir être tourné, ainsi qu'un manchon (51; 151) comportant un alésage axial (53) traversant dans lequel peut être enfilé le bouton fileté (41, 141), et une tige (43, 171) pouvant être introduite de manière lâche dans une ouverture (52; 152) oblongue qui s'étend sur la surface d'enveloppe extérieure du manchon (51, 151) et pouvant être reliée au boulon fileté (41), élément caractérisé en ce que le boulon fileté (141) peut être relié à une pièce insérée (161; 261) de guidage, guidée par le manchon (151), une tige pouvant être introduite de façon lâche dans l'ouverture (152) oblongue située sur la surface d'enveloppe extérieure du manchon (151) et pouvant être bloquée solidement dans un trou (165) de la pièce rapportée (161) de guidage, ou bien en ce que le manchon (241) comportant l'ouverture oblongue est introduit dans un autre manchon (242) de renforcement, de plus grande dimension.

2. Elément de liaison selon la revendication 1, caractérisé en ce que l'élément de liaison comporte une pièce rapportée (31; 130, 121) en forme de manchon susceptible d'être reliée de manière fixe à une extrémité d'une barre (20) qui doit être utilisée, la pièce rapportée présentant un alésage traversant destiné à loger le boulon fileté (41; 141).

3. Elément de liaison selon la revendication 2, caractérisé en ce que le boulon fileté (41; 141) présente une partie lisse dont la longueur (LE') est plus grande que la longueur (LE) de la pièce rapportée (31, 121) en forme de manchon.

4. Elément de liaison selon une des revendications 1 à 3, caractérisé en ce qu'il existe un ressort (172) qui pousse le manchon (151) contre une pièce rapportée (130, 121) en forme de manchon, susceptible d'être montée à l'extrémité de la barre (10).

5. Elément de liaison selon la revendication 4, caractérisé en ce que le ressort est un ressort hélicoïdal (172) qui se trouve dans l'espace intérieur du manchon (151).

6. Elément de liaison selon une des revendications 1 à 5, caractérisé en ce que l'ouverture (222, 226; 228; 230) du manchon (221, 225, 227, 229) présente au moins; à une extrémité un élargissement ou un prolongement (224, 226'; 228', 231) formant un coude.

7. Elément de liaison selon une des revendications 1 à 6, caractérisé en ce que l'élément de liaison présente un manchon de recouvrement, au moyen duquel le manchon (51; 151; 221; 229, 242) peut être recouvert et peut être relié à cet élément.

**Claims**

1. A connecting element for a pole of a three-dimensional framework wherein the connecting element comprises a threaded bolt (41; 141) which can be rotationally mounted at one end of the pole (20) as well as a sleeve (51; 151) with an axial through bore (53) into which the threaded bolt (41; 141) can be introduced, and wherein a pin (43; 171) can be introduced loosely through an elongated opening (52; 152) extending along the peripheral surface of the sleeve (51; 151) and can be connected to the threaded bolt (41), characterised in that the threaded bolt (141) can be connected to a guide insert (161; 261) guided by the sleeve (151) in that a pin can be introduced loosely through the elongated opening (152) present at the peripheral surface of the sleeve (151) and can be firmly wedged in a hole (165) in the guide insert (161), or that the sleeve (241) provided with the elongated openings is introduced into a further larger reinforcing sleeve (242).

2. A connecting element according to Claim 1, characterised in that the connecting element comprises a sleeve insert (31; 130; 121) which can be connected stationarily to one end of a pole (20) to be used and which comprises a through bore for the threaded bolt (41; 141).

3. A connecting element according to Claim 2, characterised in that the threaded bolt (41; 141) has a smooth portion, the length (LE') of which is greater than the length (LE) of the sleeve insert (31; 121).

4. A connecting element according to any one of Claims 1 to 3, characterised in that a spring (172) is present which urges the sleeve (151) against a sleeve insert (130, 121) which can be mounted on the end of the pole (10).

5. A connecting element according to Claim 4, characterised in that the spring is a helical spring (172) situated in the interior of the sleeve (151).

6. A connecting element according to any one of Claims 1 to 5, characterised in that the opening (222; 226; 228; 230) in the sleeve (221; 225; 227; 229) has a deflected extension (224; 226'; 228'; 231) at least at one end.

7. A connecting element according to any one of Claims 1 to 6, characterised in that the connecting element comprises a covering sleeve whereby the sleeve (51; 151; 221; 229; 242) can be covered and connected thereto.

Fig. 1

Fig. 2

Fig. 3

Fig. 4

Fig. 5

Fig. 6

Fig.7

Fig.8

Fig. 9

Fig. 10

121

131

130

Fig. 11

Mh

143

141

142

QB

MH'

MB

Me

QC

Fig. 12

Mp

152 151

153

Qp

MP

Md

152

151

153

## Fig. 13

## Fig. 14

Fig. 15

Fig. 16

Fig. 17

Fig. 18

Fig. 19

Fig. 20

221  222  224

223

Fig. 21

225  226  226'

w

Fig. 22

227  228  228'

Fig. 23

229  230  231

Fig. 24

245  244  242

241

246

247  243

## Fig. 25

251
252

## Fig. 26

261
262

## Fig. 27

270